# EUROPÄISCHE PATENTANMELDUNG

(11) **EP 4 742 176 A1**
(43) Veröffentlichungstag der Anmeldung: **13.05.2026**
(21) Anmeldenummer: 25206298.9
(22) Anmeldetag: 02.10.2025
(51) Int. Cl.: G06V 10/44, G06V 10/764, G06V 10/774, G06V 10/82, G06V 20/56

(54) **VERFAHREN ZUM ERKENNEN EINES PRIMÄROBJEKTS**

(30) Priorität: 11.11.2024 DE 102024132778
(71) Anmelder: CLAAS E-Systems GmbH, 49201 Dissen (DE)
(72) Erfinder: Felske, Mirco, 33604 Bielefeld (DE)
(74) Vertreter: CLAAS Gruppe

(57) **Zusammenfassung**

Die vorliegende Erfindung betrifft ein computer-implementiertes Verfahren (1000) zum Erkennen eines Primärobjekts (2040) in einer Feldumgebung (2070), das Verfahren (1000) umfassend: Bereitstellen eines trainierten Klassifizierungsmodells (K); und Erkennen des Primärobjekts (2040), indem ein Bild der Feldumgebung (2070) erfasst wird und das Primärobjekt (2040) mittels des trainierten Klassifizierungsmodells (K) im erfassten Bild detektiert wird. Die vorliegende Erfindung betrifft ferner eine landwirtschaftliche Arbeitsmaschine (2000).

## Beschreibung

Die vorliegende Erfindung betrifft ein computer-implementiertes Verfahren zum Erkennen eines Primärobjekts in einer Feldumgebung. Ferner betrifft die vorliegende Erfindung eine landwirtschaftliche Arbeitsmaschine.

Die präzise und effiziente Erkennung von Objekten in einer landwirtschaftlichen Feldumgebung - seien es Tiere, Menschen oder Fahrzeuge - spielt eine entscheidende Rolle für vielfältige Anwendungen in der Landwirtschaft. Sobald ein Objekt identifiziert wird, können landwirtschaftliche Maschinen basierend auf diesen Informationen angepasst werden. Erkennt das System beispielsweise einen Baum in der Fahrtrichtung der Maschine, kann der Bediener die Einstellungen derart vornehmen, dass der Baum umfahren wird, wodurch eine Kollision vermieden und ein sicherer Arbeitsablauf gewährleistet werden kann.

Bei der Objekterkennung in der Feldumgebung gelten typischerweise andere Standards als bei Fahrzeugen im Verkehr, da die Anforderungen und Bedingungen sich deutlich unterscheiden. In der Landwirtschaft steht die Identifizierung natürlicher und oft unregelmäßiger Objekte wie Pflanzen, Unkraut oder Bodenkonturen im Vordergrund. Die Feldumgebung erfordert flexible Modelle, die mit variablen Lichtverhältnissen, Wetterbedingungen und unstrukturierten Landschaften umgehen können. Im Gegensatz dazu konzentriert sich die Objekterkennung im Verkehr üblicherweise auf standardisierte Elemente wie Straßenschilder, Fahrspuren und andere Fahrzeuge.

Zur Objekterkennung werden standardmäßig Klassifizierungsmodelle eingesetzt, die beispielsweise in der Lage sind, von einem Kamerasystem erfasste Bilder zu analysieren und zu klassifizieren. Mittels der Klassifizierungsmodelle ist es möglich, zu erkennen, welches Objekt im erfassten Bild dargestellt bzw. abgebildet wird.

Klassifizierungsmodelle werden üblicherweise basierend auf einem Trainingsdatensatz trainiert. Der Trainingsdatensatz kann dabei Bilddaten umfassen, wobei die Bilddaten wiederum in Primärbilddaten und Sekundärbilddaten aufgeteilt sein können. Dabei ist ein Primärobjekt typischerweise in den Primärbildern abgebildet, d.h. das Primärobjekt kann jeweils einem der Primärbildern zugeordnet sein. Es ist ferner möglich, dass ein Sekundärobjekt entsprechend in den Sekundärbildern abgebildet ist.

Herkömmlicherweise weist der Trainingsdatensatz gleiche Anzahl bzw. Mengen von Primärbilddaten und Sekundärbilddaten auf (d.h. Primärbilddaten und Sekundärbilddaten haben jeweils einen Anteil von 50 % des Trainingsdatensatzes). Ein derartiger Trainingsdatensatz bringt jedoch einige Herausforderungen mit sich. Beispielsweise ergibt sich somit ein Trainingsdatensatz mit einer großen Datenmenge. Beim Training mit einem derartigen Trainingsdatensatzes ist üblicherweise eine hohe Rechenleistung notwendig. Generell können beim Training auch Stabilitätsprobleme auftreten. Zusätzlich können Probleme wie unzureichende Generalisierung, erhöhter Speicherbedarf und längere Trainingszeiten auftreten. Folglich können auch die auf dem Trainingsdatensatz basierenden Klassifizierungsmodelle an ihre Grenzen stoßen.

Eine Aufgabe der vorliegenden Erfindung ist es daher, die bisherigen Verfahren und Vorrichtungen derart weiterzuentwickeln, dass Objekte besonders effizient und präzise erkannt werden können.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein computer-implementiertes Verfahren zum Erkennen eines Primärobjekts in einer Feldumgebung. Das Verfahren kann ein Bereitstellen eines trainierten Klassifizierungsmodells umfassen. Dabei kann das Klassifizierungsmodell basierend auf einem Trainingsdatensatz, umfassend ein Mengenverhältnis von Primärbildern und Sekundärbildern, trainiert worden sein. Das Primärobjekt kann in den Primärbildern und das Sekundärobjekt in den Sekundärbildern abgebildet sein. Ferner kann das Mengenverhältnis mittels eines Referenzmodells bestimmt worden sein, indem das Referenzmodell iterativ basierend auf verschiedenen Mengen von Primärbildern und Sekundärbildern trainiert wurde, so dass eine Konvergenz einer Evaluationsmetrik basierend auf dem Referenzmodell ermittelt wurde und sich nach der Konvergenz das Mengenverhältnis von Primärbildern und Sekundärbildern einstellte. Das Verfahren kann ferner ein Erkennen des Primärobjekts umfassen. Dabei kann das Primärobjekt erkannt werden, indem ein Bild der Feldumgebung erfasst wird und das Primärobjekt mittels des trainierten Klassifizierungsmodells im erfassten Bild detektiert wird.

Eine Feldumgebung kann einen begrenzten natürlichen oder landwirtschaftlichen Raum umfassen, in dem Pflanzen angebaut, bearbeitet und geerntet werden. Eine Feldumgebung kann eine von der landwirtschaftlichen Arbeitsmaschine zu bearbeitende Fläche aufweisen. Eine Feldumgebung kann natürliche, infrastrukturelle oder künstliche Elemente wie Flüsse, Bäume, Zäune, Straßen, Bewässerungssysteme und andere Bauwerke umfassen.

Das Primärobjekt kann sich auf ein Objekt beziehen, das sich in der Feldumgebung befindet oder temporär aufhält. Beispielsweise kann es sich beim Primärobjekt um ein Tier, einen Menschen, ein Fahrzeug oder ein anderes relevantes Objekt handeln. Das Primärobjekt kann dabei einer Klasse zugeordnet werden. Das Primärobjekt kann ein Hindernis für die landwirtschaftliche Arbeitsmaschine darstellen. Entsprechendes gilt für das Sekundärobjekt, d.h. das Sekundärobjekt kann sich auf ein weiteres Objekt beziehen, das sich in der Feldumgebung befindet. Das Sekundärobjekt kann einer weiteren Klasse zugeordnet werden.

Der Trainingsdatensatz kann eine Sammlung von Daten, insbesondere Bilddaten, zum Trainieren eines Klassifizierungsmodells umfassen. Der Trainingsdatensatz kann Eingabedaten und die zugehörigen richtigen Ausgaben umfassen. Während des Trainings bzw. Trainingsprozesses kann das Klassifizierungsmodell lernen, Muster und Zusammenhänge in den Daten zu erkennen, um präzise Vorhersagen oder Klassifikationen für neue, unbekannte Daten treffen zu können. Ein gut ausgewählter und repräsentativer Trainingsdatensatz kann entscheidend für die Leistungsfähigkeit und Genauigkeit des Klassifizierungsmodells sein. Der Trainingsdatensatz kann Primärbilder, Sekundärbilder und möglicherweise Bilder für weitere Klassen umfassen.

Das Klassifizierungsmodell kann zur Bildklassifizierung ausgelegt sein und Bilddaten bzw. einzelne Bilder in vordefinierte Klassen (bspw. Klasse "Tier", "Mensch", "Fahrzueg", usw.) einzuordnen. Das Klassifizierungsmodell kann Algorithmen, wie bspw. Convolutional Neural Networks (CNNs), verwenden, um aus Bildern relevante Merkmale zu extrahieren und diese zu analysieren. Das trainierte Klassifizierungsmodell kann mithilfe eines Trainingsdatensatzes optimiert worden sein, um Eingabedaten in vordefinierte Kategorien oder Klassen einzuordnen. Durch den Trainingsprozess hat das Modell möglicherweise gelernt, Muster und Merkmale in den Daten zu erkennen und zu interpretieren, sodass es beispielsweise neue, unbekannte Daten bzw. in Bildern dargestellte Objekte mit hoher Genauigkeit klassifizieren kann.

Das Bereitstellen eines trainierten Klassifizierungsmodells kann sich auf den Prozess beziehen, das trainierte Klassifizierungsmodell in einer Feldumgebung bzw. während eines Ernteprozesses verfügbar zu machen, damit es auf neue, reale Daten angewendet werden kann. Das Bereitstellen umfasst typischerweise die Integration des Modells in eine Anwendung oder ein System (bspw. eine landwirtschaftliche Arbeitsmaschine) das Benutzern den Zugriff auf seine Vorhersagefähigkeiten ermöglicht. Typischerweise wird das Klassifizierungsmodell automatisiert geladen bzw. bereitgestellt. Es ist ferner möglich, dass ein Benutzer mithilfe des bereitgestellten, trainierten Klassifizierungsmodells die Klasse eines Objekts bestimmen. Beispielsweise lädt der Benutzer ein Bild als Eingabedaten in das Klassifizierungsmodell, das dann die passende Klasse ermittelt.

Das Mengenverhältnis von Primärbildern zu Sekundärbildern kann das proportionale Verhältnis zwischen den zwei Gruppen von Bildern innerhalb eines Datensatzes beschreiben. Das Mengenverhältnis kann angeben, wie viele Primärbilder im Vergleich zu Sekundärbildern vorhanden sind, zum Beispiel 3:1, was bedeutet, dass es drei Primärbilder für jedes Sekundärbild gibt. Das Mengenverhältnis kann auch relativ zur Gesamtbildermenge angegeben werden, d.h. das Mengenverhältnis kann beispielsweise angeben, dass 25 % der Gesamtbilder Primärbilder sind.

Das Referenzmodell kann ein Modell sein, das zur Bestimmung des Mengenverhältnisses herangezogen wird. Es kann dem gleichen Modelltyp wie das Klassifizierungsmodell oder einem anderen Modelltyp angehören. Das Referenzmodell kann als Grundlage dienen, um festzustellen, wie viele Bilder jeder Klasse in einem Datensatz, beispielsweise dem Trainingsdatensatz, enthalten sind oder sein müssen. Das Referenzmodell kann dabei helfen, die Balance und Verteilung der Daten zu analysieren.

Die Evaluationsmetrik kann ein Maßstab sein (d.h. eine quantifizierbare Einheit), der verwendet wird, um die Leistung eines Modells (bspw. eines Referenzmodells oder eines Klassifizierungsmodells) zu beurteilen. Iterativ kann bedeuten, einen Prozess durch wiederholte Zyklen oder Schritte zu durchlaufen, bei denen Ergebnisse aus vorherigen Zyklen zur Verfeinerung und Verbesserung des Prozesses genutzt werden. Bei jedem Iterationsschritt kann ein anderes Mengenverhältnis bzw. andere Menge von Primärbildern und Sekundärbildern genutzt werden, um das Referenzmodell oder Klassifizierungsmodell zu trainieren. Mit Menge von Primärbildern bzw. Sekundärbildern kann dabei die Anzahl der Primärbilder bzw. Sekundärbilder gemeint sein. Ferner kann bei jedem Iterationsschritt die Evaluationsmetrik bestimmt werden. Mit jedem Iterationsschritt kann sich die Evaluationsmetrik einem stabilen Wert annähern.

Konvergenz kann bedeuten, dass mittels Iterationen mit verschiedenen Mengenverhältnissen ein Punkt erreicht wird, an dem die Evaluationsmetrik stabil wird und sich nicht mehr signifikant verändert.

Das Erfassen eines Bildes der Feldumgebung kann bedeuten, ein Foto oder eine visuelle Aufnahme der Umgebung zu machen, in der sich das Primärobjekt befindet, das analysiert oder identifiziert werden soll. Mit dem trainierten Klassifizierungsmodell kann dieses Primärobjekt im Bild erkannt werden. Die Erkennung des Primärobjekts kann zur Sicherheit, Effizienz und Effektivität der eingesetzten landwirtschaftlichen Maschinen und Verfahren beitragen.

Mit anderen Worten kann das Verfahren vorsehen, ein Modell mit einem Trainingsdatensatz zu entwickeln, wobei der Trainingsdatensatz ein ausgewogenes (Mengen-)Verhältnis von Primär- und Sekundärbildern umfasst. Um das ausgewogene (Mengen-)Verhältnis dieser Bildtypen zu bestimmen, kann beispielsweise das Referenzmodell verwendet werden, das iterativ mit verschiedenen Bildmengen trainiert wird, bis eine bestimmte Evaluationsmetrik konvergiert. Vorteilhafterweise kann somit sichergestellt werden, dass die Leistung des Referenzmodells bzw. Klassifizierungsmodells maximiert wird. Darüber hinaus lässt sich die optimale bzw. minimale Anzahl an Bildern (d.h. Primär- und Sekundärbilder) ermitteln, die erforderlich ist, um eine maximale Leistung gemäß der Evaluationsmetrik sicherzustellen.

Vorteilhafterweise kann die landwirtschaftliche Arbeitsmaschine mittels der Erkennung von Primärobjekten, wie beispielsweise Pflanzen, Unkraut oder Hindernissen, effizienter und sicherer arbeiten. Dies kann zu einer Optimierung des Ernteprozesses führen, da Arbeitsmaschinen in der Lage sind, zielgerichtet und automatisch auf verschiedene Situationen im Feld zu reagieren. Ein weiterer Vorteil besteht in der Reduzierung des Bedarfs an manueller Überwachung und Steuerung, was nicht nur den Arbeitsaufwand verringern, sondern auch das Risiko menschlicher Fehler minimieren kann.

Vorteilhafterweise wird somit ein Verfahren für die Landwirtschaft bereitgestellt, das es ermöglicht Objekte in einer Feldumgebung effizient zu erkennen. Dabei kann berücksichtigt werden, dass der Trainingsprozess des Klassifizierungsmodells für manche Objekte (bspw. ein Primärobjekt) eine größere Menge von Bilddaten benötigt als für andere Objekte. Dies könnte darauf zurückzuführen sein, dass manche Objekte aufgrund Ihrer Struktur oder Form leichter zu erlernen sind als andere. Beispielsweise kann mittels des Mengenverhältnisses bestimmt werden, dass die Menge an Primärbilddaten für das Primärobjekt "Mensch" größer ist als die Menge an Sekundärdaten für das Sekundärobjekt "Fahrzeug".

In einem weiteren Aspekt kann das Verfahren ein Einstellen einer landwirtschaftlichen Arbeitsmaschine, die sich in der Feldumgebung befindet, basierend auf dem erkannten Primärobjekt umfassen.

Die landwirtschaftliche Arbeitsmaschine kann speziell für die Ernte von Nutzpflanzen vorgesehen sein. Bei der landwirtschaftlichen Arbeitsmaschine kann es sich beispielsweise um einen Feldhäcksler, Mähdrescher oder Traktor handeln. Die landwirtschaftliche Arbeitsmaschine kann selbstfahrend und/oder autonom ausgeprägt sein. Das Einstellen der landwirtschaftlichen Arbeitsmaschine kann sich auf den Prozess der Anpassung und Konfiguration der landwirtschaftlichen Arbeitsmaschine beziehen, um Konflikte, die das Primärobjekt hervorführen könnte, zu vermeiden. Das Einstellen kann beispielsweise ein Lenken oder ein Anhalten der landwirtschaftlichen Arbeitsmaschine umfassen. Auf Basis eines erkannten Primärobjekts kann eine automatische Anpassung der Lenkung erfolgen, um sicherzustellen, dass keine Kollisionen mit dem Primärobjekt auftreten. Ferner ist es auch möglich, dass das Einstellen der Arbeitsmaschine eine manuelle Anpassung durch einen Bediener der landwirtschaftlichen Arbeitsmaschine umfasst. Ferner kann das Einstellen umfassen: Eine Justierung von mechanischen Komponenten, eine Kalibrierung elektronischer Systeme sowie eine Anpassung von Parametern wie Geschwindigkeit, Druck und Tiefe, abhängig von Bodenbeschaffenheit, Pflanzenart und Umweltbedingungen.

In einem weiteren Aspekt können nach der Konvergenz die Evaluationsmetrik und eine klassenspezifische Evaluationsmetrik für das Primärobjekt in einem Wertebereich liegen. Des Weiteren ist es möglich, dass nach der Konvergenz die Evaluationsmetrik und eine klassenspezifische Evaluationsmetrik für das Sekundärobjekt in einem Wertebereich liegen. Möglicherweise kann nach der Konvergenz eine klassenspezifische Evaluationsmetrik für das Primärobjekt und eine klassenspezifische Evaluationsmetrik für das Sekundärobjekt in einem Wertebereich liegen.

Bei der Evaluationsmetrik kann es sich um eine gesamtheitliche Evaluationsmetrik handeln, wobei die (gesamtheitliche) Evaluationsmetrik die gesamtheitliche Leistung eines Modells beurteilt. Die klassenspezifische Evaluationsmetrik kann ein Maßstab für die Leistung eines Modells bezüglich einer Klasse sein (beispielsweise für die Klasse des Primärobjekt). Beispielsweise kann die klassenspezifische Evaluationsmetrik die Leistung des Modells bezüglich des Primärobjekts sein. Die klassenspezifische Evaluationsmetrik ist typischerweise die gleiche Metrik wie die (gesamtheitliche) Evaluationsmetrik. Die (gesamtheitliche) Evaluationsmetrik kann mittels der klassenspezifischen Evaluationsmetriken gebildet werden. Beispielsweise kann der Mittelwert einer Vielzahl von klassenspezifischen Evaluationsmetriken gebildet werden, um die (gesamtheitliche) Evaluationsmetrik zu bilden.

Wenn die (gesamtheitliche) Evaluationsmetrik und die klassenspezifische Evaluationsmetrik in einem Wertebereich liegen, kann dies beispielsweise bedeuten, dass beide Metriken Werte annehmen, die innerhalb desselben festgelegten Bereichs von Ergebnissen oder Zahlen liegen. Der Wertebereich kann möglicherweise angeben, welche Werte die Metriken maximal und minimal erreichen können.

In einem weiteren Aspekt kann eine Relation zwischen einer klassenspezifischen Evaluationsmetrik für das Primärobjekt und einer klassenspezifischen Evaluationsmetrik für das Sekundärobjekt bestimmt worden sein.

Die Relation kann sich auf das Verhältnis zwischen den Evaluationsmetriken für das Primärobjekt und das Sekundärobjekt beziehen. Diese Betrachtungsweise kann es ermöglichen, eine zusätzliche Bedingung im Trainingsprozess festzulegen, was die Feinabstimmung und Optimierung des Modells weiter fördern kann.

In einem weiteren Aspekt kann die Evaluationsmetrik eine Sensitivität, Präzision, Genauigkeit oder einen F1 Score umfassen.

Sensitivität, auch als Empfindlichkeit oder Recall bekannt, kann die Fähigkeit des Modells angeben, tatsächlich positive Fälle korrekt zu identifizieren. Präzision kann möglicherweise angeben, wie viele der als positiv klassifizierten Fälle tatsächlich positiv sind. Präzision kann entscheidend sein, um Fehlalarme zu minimieren. Genauigkeit kann einen allgemeinen Überblick darüber geben, wie viele der gesamten Vorhersagen korrekt sind. Der F1-Score, als harmonisches Mittel von Präzision und Sensitivität, kann die Gesamtleistung beurteilen.

In einem weiteren Aspekt kann jedes der Primärbilder ein Label umfassen, wobei das Label angibt, dass das Primärobjekt in dem entsprechenden Primärbild abgebildet ist. Ferner ist es möglich, dass jedes der Primärbilder eine Vielzahl von Pixeln umfasst und eine Anzahl an Pixeln zusammengefasst dem Primärobjekt zuordbar sind.

Mit anderen Worten kann das Label in Bezug auf Bilddaten eine Kennzeichnung oder Beschreibung sein, die einem Bild (bspw. der Primärbilder) zugeordnet wird, um dessen Inhalt oder Klasse zu identifizieren. Labels werden typischerweise verwendet, um Bilddaten zu annotieren, damit Klassifizierungsmodelle darauf trainiert werden können. Beispielsweise könnte ein Bild von einem Menschen das Label "Mensch" erhalten. Diese Labels können als Zielwerte dienen, die das Klassifizierungsmodell während des Trainings zu lernen versucht. Labels bei Bilddaten können präzises Training und Validierung von Klassifizierungsmodellen ermöglichen, die Genauigkeit verbessern und die Organisation von Datensätzen mit Mengenverhältnissen unterstützen.

Um die Anzahl an Pixeln einem Primärobjekt in einem Bild zuzuordnen, kann beispielsweise eine Segmentierungsmethode verwendet werden, die das Bild in verschiedene Regionen unterteilt. Dabei können die Pixel, die zum Primärobjekt gehören, identifiziert und gezählt werden. Diese Methode kann beispielsweise durch Schwellenwertverfahren, Kantenerkennung oder moderne Ansätze wie Deep-Learning-gestützte Bildsegmentierung erfolgen, um präzise die Grenzen des Objekts zu bestimmen.

Ein weiterer Aspekt bezieht sich auf ein computer-implementiertes Verfahren zum Erstellen eines Trainingsdatensatzes. Das Verfahren kann ein Bereitstellen eines Referenzmodells umfassen. Ferner kann das Verfahren ein Bereitstellen von Primärbildern und Sekundärbildern umfassen. In einem weiteren Schritt kann das Verfahren ein Trainieren des Referenzmodells umfassen. Das Referenzmodell kann iterativ basierend auf verschiedenen Mengen von Primärbildern und Sekundärbildern trainiert werden, so dass eine Konvergenz einer Evaluationsmetrik basierend auf dem Referenzmodell ermittelt wird und sich nach der Konvergenz ein Mengenverhältnis von Primärbildern und Sekundärbildern einstellt. Das Verfahren kann ferner ein Erstellen des Trainingsdatensatzes basierend auf dem Mengenverhältnis umfassen.

Das Bereitstellen von Primärbildern und Sekundärbildern kann ein Sammeln und Vorverarbeiten eines umfangreichen Datensatzes von Bildern umfassen. Die Bilder können bereits mit Labels versehen sein. Zu den verschiedenen Referenzmodellen, die für die Objekterkennung eingesetzt werden können, gehören beispielsweise Convolutional Neural Networks (CNNs), Region-based Convolutional Neural Networks (R-CNN), Fast R-CNN, Faster R-CNN, You Only Look Once (YOLO) und Single Shot MultiBox Detector (SSD). Für das Trainieren können beispielsweise überwachte, unüberwachte, halbüberwachte, bestärkende, transferbasierte, online- und batchbasierte Trainingsmethoden eingesetzt werden.

Ein weiterer Aspekt bezieht sich auf ein computer-implementiertes Verfahren zum Trainieren eines Klassifizierungsmodells. Das Verfahren kann ein Bereitstellen eines Klassifizierungsmodells umfassen. Ferner kann das Verfahren ein Trainieren des Klassifizierungsmodells basierend auf einem Trainingsdatensatz umfassen. Dabei kann der Trainingsdatensatz nach einem der vorhergehenden Aspekte erstellt worden sein.

Mittels Trainings des Modells auf die Trainingsdaten kann es lernen, spezifische Merkmale zu erkennen und mit den richtigen Labels zu verknüpfen. Nach erfolgreicher Validierung seiner Genauigkeit kann das Modell neue, unbekannte Bilder analysieren und zuverlässig klassifizieren.

Ein weiterer Aspekt bezieht sich auf ein Computersystem zum Bereitstellen eines trainierten Klassifizierungsmodells. Das Computersystem kann Mittel zum Senden des trainierten Klassifizierungsmodells an eine landwirtschaftliche Arbeitsmaschine umfassen. Dabei kann das Klassifizierungsmodell nach einem der vorhergehenden Aspekte trainiert worden sein.

Das Computersystem kann beispielsweise als Server oder in der Cloud betrieben werden. Dabei kann das Computersystem mit der landwirtschaftlichen Arbeitsmaschine Daten austauschen. Das Computersystem kann beispielsweise Sensordaten, Maschinendaten oder Modelldaten verarbeiten, speichern und analysieren. Das Computersystem kann Mittel zum Trainieren des Klassifizierungsmodells bereitstellen. Beispielsweise kann das Computersystem Rechenressourcen, spezialisierte Software und Algorithmen umfassen, um große Datenmengen effizient zu verarbeiten und das Modell zu optimieren.

Ein weiterer Aspekt bezieht sich auf ein System zur Datenverarbeitung für eine landwirtschaftliche Arbeitsmaschine, umfassend einen Prozessor, der so angepasst und/oder konfiguriert ist, dass er das Verfahren nach einem der vorhergehenden Aspekte ausführt.

Dieses System kann ein trainiertes Klassifizierungsmodell, das mit einem Mengenverhältnis von Primärbildern und Sekundärbildern trainiert wurde, bereitstellen, empfangen und/oder nutzen. Das trainierte Klassifizierungsmodell kann in gespeicherter Form auf dem System vorliegen. Dies kann bedeuten, dass das Klassifizierungsmodell nach dem Training so aufbereitet wurde, dass es direkt auf dem Prozessor einsatzbereit ist. Durch die Speicherung des Modells auf dem System kann die landwirtschaftliche Arbeitsmaschine effizient und in Echtzeit auf das Modell zugreifen, um Bilder aus der Feldumgebung zu analysieren und das Primärobjekt zu identifizieren. Diese lokale Speicherung ermöglicht beispielsweise eine schnelle Verarbeitung und reduziert die Abhängigkeit von externen Datenquellen oder einer kontinuierlichen Internetverbindung, was besonders in abgelegenen landwirtschaftlichen Gebieten von Vorteil sein kann.

Ein weiterer Aspekt bezieht sich auf eine landwirtschaftliche Arbeitsmaschine mit einem System zur Datenverarbeitung nach einem der vorhergehenden Aspekte.

Die landwirtschaftliche Arbeitsmaschine kann mit einem Kamerasystem ausgestattet sein, das für die Erfassung von Bildern der Feldumgebung eingerichtet ist. Die erfassten Bilder können von dem System zur Datenverarbeitung verwendet werden (bzw. diesem zur Verfügung gestellt werden). Kamerasystem und System zur Datenverarbeitung können in Verbindung stehen und Daten austauschen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert oder geregelt wird. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird. Alle Aspekte des Verfahrens bzw. Verfahrensschritte können möglicherweise automatisiert ablaufen.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: schematische Darstellung eines computer-implementierten Verfahren zum Erkennen eines Primärobjekts in einer Feldumgebung gemäß einer Ausführungsform;
- Fig. 2: eine schematische Darstellung einer landwirtschaftlichen Arbeitsmaschine mit einem System zur Datenverarbeitung gemäß einer Ausführungsform;
- Fig. 3: eine schematische Darstellung eines Frameworks zum Bestimmen eines Mengenverhältnisses gemäß einer Ausführungsform;
- Fig. 4: Darstellung von Ergebnissen eines Iterationsverfahrens gemäß einer Ausführungsform.; und
- Fig. 5: schematische Darstellung eines computer-implementierten Verfahren zum Trainieren des Klassifizierungsmodells gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

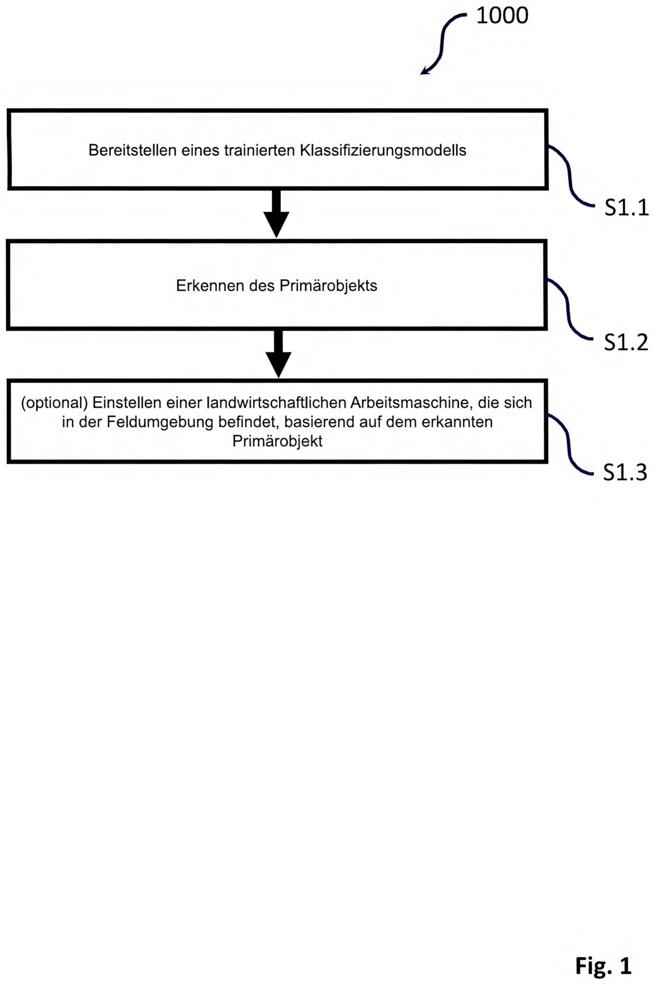

Fig. 1 zeigt eine schematische Darstellung eines computer-implementierten Verfahren 1000 zum Erkennen eines Primärobjekts in einer Feldumgebung gemäß einer Ausführungsform.

Das Verfahren 1000 umfasst in einem ersten Schritt S1.1 ein Bereitstellen eines trainierten Klassifizierungsmodells. Dabei kann das Klassifizierungsmodell basierend auf einem Trainingsdatensatz, umfassend ein Mengenverhältnis von Primärbildern und Sekundärbildern, trainiert worden sein. Das Primärobjekt kann in den Primärbildern und das Sekundärobjekt in den Sekundärbildern abgebildet sein. Ferner kann das Mengenverhältnis mittels eines Referenzmodells bestimmt worden sein, indem das Referenzmodell iterativ basierend auf verschiedenen Mengen von Primärbildern und Sekundärbildern trainiert wurde, so dass eine Konvergenz einer Evaluationsmetrik basierend auf dem Referenzmodell ermittelt wurde und sich nach der Konvergenz das Mengenverhältnis von Primärbildern und Sekundärbildern einstellte.

In einem weiteren Schritt S1.2 umfasst das Verfahren 1000 ein Erkennen des Primärobjekts, indem ein Bild der Feldumgebung erfasst wird und das Primärobjekt mittels des trainierten Klassifizierungsmodells im erfassten Bild detektiert wird.

In einem weiteren optionalen Schritt S1.3 umfasst das Verfahren 1000 ein Einstellen einer landwirtschaftlichen Arbeitsmaschine, die sich in der Feldumgebung befindet, basierend auf dem erkannten Primärobjekt.

Vorteilhafterweise kann mittels dieses Verfahrens sichergestellt werden, dass die Leistung der Referenzmodells bzw. Klassifizierungsmodells maximiert wird. Darüber hinaus lässt sich die optimale bzw. minimale Anzahl an Bildern (d.h. Primär- und Sekundärbilder) ermitteln, die erforderlich ist, um eine maximale Leistung gemäß der Evaluationsmetrik sicherzustellen.

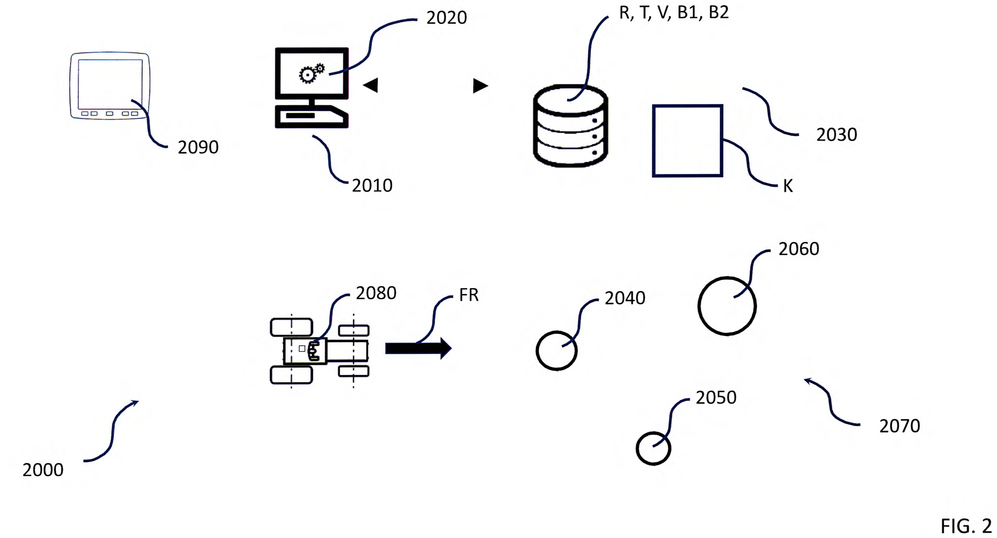

Fig. 2 zeigt eine schematische Darstellung einer landwirtschaftlichen Arbeitsmaschine 2000 mit einem System 2010 zur Datenverarbeitung gemäß einer Ausführungsform.

Die landwirtschaftliche Arbeitsmaschine 2000 befindet sich in einer Feldumgebung 2070, wobei es sich bei der Feldumgebung 2070 in diesem Beispiel um eine begrenzte natürliche, landwirtschaftliche Fläche handelt, auf der Pflanzen angebaut, bearbeitet und geerntet werden. Die landwirtschaftliche Arbeitsmaschine 2000 bearbeitet diese Fläche, indem sie sich in die Fahrtrichtung FR bewegt und beispielsweise Erntegut erntet. In der Feldumgebung 2070 befindet sich ein Primärobjekt 2040, ein Sekundärobjekt 2050 und ein weiteres Objekt 2060. Diese Objekte 2040, 2050, 2060 können Hindernisse für die landwirtschaftlichen Arbeitsmaschine 2000 darstellen. Ferner können die Objekte 2040, 2050, 2060 auch Ziele (bspw. im Sinne von Nutzpflanzen die geerntet werden sollen) sein

Das System 2010 zur Datenverarbeitung der landwirtschaftlichen Arbeitsmaschine 2000 umfasst beispielsweise einen Prozessor 2020, der so angepasst und/oder konfiguriert ist, dass er das Verfahren 1000 gemäß der in Fig. 1 dargestellten Ausführungsform ausführt.

Ferner kann ein Computersystem 2030 zum Bereitstellen eines trainierten Klassifizierungsmodells K vorgesehen sein. Das Computersystem 2030 umfasst beispielsweise Mittel zum Senden des trainierten Klassifizierungsmodells K an die landwirtschaftliche Arbeitsmaschine 2000. Entsprechend kann das Klassifizierungsmodell K von dem System 2010 zur Datenverarbeitung empfangen und gespeichert werden. Das Klassifizierungsmodell K kann für die Objekterkennung offline auf der landwirtschaftlichen Arbeitsmaschine 2000 verwendet werden. Das Referenzmodell R, den Trainingsdatensatz T, das Mengenverhältnis V, die Primärbilder B1 und/oder die Sekundärbilder B2 können in einer Datenbank des Computersystems 2030 gespeichert sein.

Die landwirtschaftliche Arbeitsmaschine 2000 kann mit einem Kamerasystem 2080 ausgestattet sein, das für die Erfassung von Bildern der Feldumgebung 2070 eingerichtet ist. Die erfassten Bilder können von dem System 2010 zur Datenverarbeitung verwendet werden (bzw. diesem zur Verfügung gestellt werden). Das Kamerasystem 2080 und System 2010 zur Datenverarbeitung können in Verbindung stehen und Daten austauschen.

Mittels des Systems 2010 zur Datenverarbeitung kann das Primärobjekt 2040 in der Feldumgebung 2070 erkannt werden, indem ein Bild der Feldumgebung 2070 erfasst wird und das Primärobjekt 2040 mittels des trainierten Klassifizierungsmodells K im erfassten Bild detektiert wird. Das System 2010 zur Datenverarbeitung kann ferner veranlassen oder kann derart konfiguriert sein, die landwirtschaftliche Arbeitsmaschine 2000 basierend auf dem erkannten Primärobjekt 2040 einzustellen. Das Einstellen der landwirtschaftlichen Arbeitsmaschine 2000 bezieht sich vorliegend auf den Prozess der Anpassung und Konfiguration der landwirtschaftlichen Arbeitsmaschine 2000, um Konflikte, die die Objekte 2040, 2050, 2060 hervorführen könnten (d.h. beispielsweise eine Kollision), zu vermeiden. Das Einstellen der landwirtschaftlichen Arbeitsmaschine 2000 kann auch ein gezieltes Ansteuern der Objekte 2040, 2050, 2060 umfassen. Das Einstellen kann beispielsweise ein Lenken oder ein Stoppen der landwirtschaftlichen Arbeitsmaschine 2000 umfassen. Auf Basis eines erkannten Primärobjekts 2040 kann eine automatische Anpassung der Lenkung erfolgen, um sicherzustellen, dass die landwirtschaftliche Arbeitsmaschine 2000 exakt einen Pfad verfolgt und keine Kollisionen mit dem Primärobjekt 2040 auftreten.

Entsprechendes gilt auch für die Erkennung von Sekundärobjekten. Die landwirtschaftliche Arbeitsmaschine 2000 kann ferner eine Ausgabeeinrichtung 2090 aufweisen, um Bilder und/oder erkannte Objekte einem Bediener anzugeben. Somit ist es möglich, dass die landwirtschaftliche Arbeitsmaschine 2000 manuell durch einen Bediener angepasst wird, sobald ein erkanntes Objekt auf der Ausgabeeinrichtung 2090 gezeigt wird. Vorteilhafterweise kann die landwirtschaftliche Arbeitsmaschine 2000 mittels der Erkennung von Primärobjekten 2040 oder Sekundärobjekten 2050 effizienter und sicherer arbeiten.

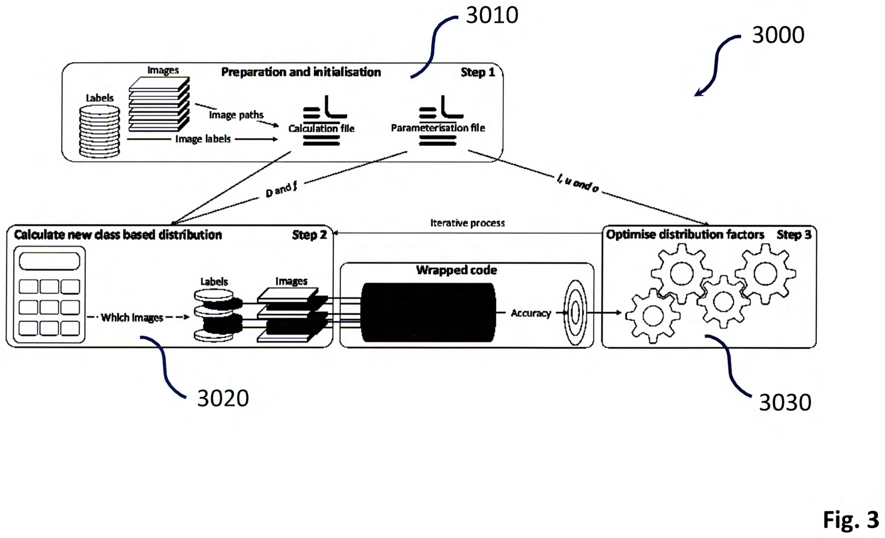

Fig. 3 zeigt eine schematische Darstellung eines Frameworks 3000 zum Bestimmen eines Mengenverhältnisses gemäß einer Ausführungsform. Unter Framework kann ein Programmiergerüst bzw. ein Entwicklungsrahmen verstanden werden, das Werkzeuge für die Softwaretechnik, insbesondere die objektorientierte Softwareentwicklung, bereitstellt. Das Framework kann Funktionen, Algorithmen, Laufzeitumgebung, Bibliotheken und eine Reihe von Basis-Bausteinen umfassen.

Ein erster Abschnitt 3010 umfasst die Datenaufbereitung und -initialisierung. In diesem Abschnitt werden alle verfügbaren Bilddaten (d.h. Primärbilder und Sekundärbilder) und Labels eingelesen und gespeichert. Ferner werden die Label den Bilddaten zugewiesen, d.h. es kann berücksichtigt werden, dass jedes der Primärbildern ein Label umfasst, wobei das Label angibt, dass das Primärobjekt 2040 in dem entsprechenden Primärbild abgebildet ist. Entsprechend kann jedes der Sekundärbildern ein Label umfassen, wobei das Label angibt, dass das Sekundärobjekt 2050 in dem entsprechenden Sekundärbild abgebildet ist.

Es ist auch möglich, dass jedes der Primärbildern bzw. Sekundärbildern eine Vielzahl von Pixeln umfasst und eine Anzahl an Pixeln zusammengefasst dem Primärobjekt 2040 bzw. Sekundärobjekt 2050 zuordbar sind.

Im zweiten Abschnitt 3020 kann ein initiales Mengenverhältnis bestimmt werden. Zum Beispiel können anfänglich sowohl die Primärbilder als auch die Sekundärbilder jeweils 50 % der gesamten Bilddaten ausmachen. In Kombination mit einem dritten Abschnitt 3030 kann das Mengenverhältnis zwischen Primärbildern und Sekundärbildern bestimmt werden. Dabei wird das Referenzmodell iterativ basierend auf verschiedenen Mengen von Primärbildern und Sekundärbildern trainiert, so dass die Genauigkeit des Referenzmodells konvergiert. Iterativ bedeutet, den Prozess durch wiederholte Zyklen oder Schritte zu durchlaufen, bei denen Ergebnisse aus vorherigen Zyklen zur Verfeinerung und Verbesserung des Prozesses genutzt werden. Bei jedem Iterationsschritt wird hier beispielsweise ein anderes Mengenverhältnis bzw. andere Anzahlen von Primärbildern und Sekundärbildern genutzt, um das Referenzmodell zu trainieren. Nach der Konvergenz stellt sich typischerweise ein (finales) Mengenverhältnis von Primärbildern und Sekundärbildern ein. Der Framework bietet ein besonders kompaktes und einfach zu bedienendes Werkzeug zum Bestimmen eines Mengenverhältnisses.

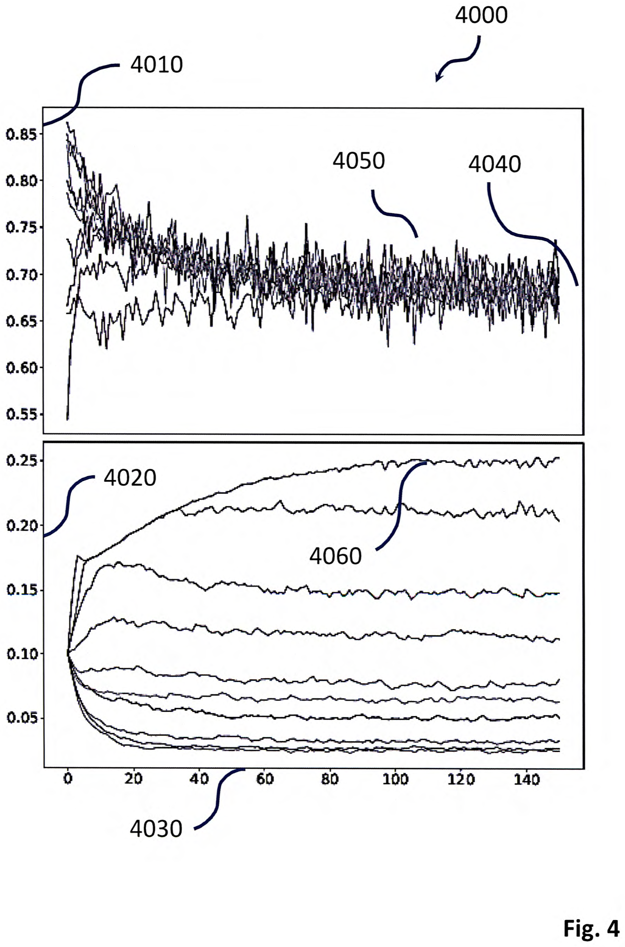

Fig. 4 zeigt eine Darstellung von Ergebnissen 4000 eines Iterationsverfahrens gemäß einer Ausführungsform. Die Ergebnisse umfassen klassenspezifische Genauigkeiten 4010 und klassenspezifische Mengenverhältnisse 4020 für verschiedene Iterationsschritte 4030. Im Vorfeld wurden zehn Klassen festgelegt und alle Bilder eines Datensatzes wurden mittels Labels jeweils einer Klasse zugeordnet. Ist in einem Bild beispielsweise ein Hund abgebildet, wurde diesem Bild das Label "Hund" zugewiesen. Im nächsten Schritt wurde das Referenzmodell iterativ basierend auf verschiedenen Mengen von Bildern trainiert.

Fig. 4 zeigt das Verhalten über mehrere Iterationsschritte 4030 des Iterationsverfahrens (abgebildet auf der x-Achse). In der oberen Abbildung wird der Verlauf der klassenspezifischen Genauigkeit für jede der zehn Klassen dargestellt. Die Evaluationsmetrik ist in diesem Fall die Genauigkeit des Referenzmodells. Die klassenspezifische Genauigkeit ist in diesem Ausführungsbeispiel ein Maßstab für die Leistung des Referenzmodells bezüglich einer Klasse (beispielsweise Klasse für das Primärobjekt und eine Klasse für das Sekundärobjekt). Nach mehreren Iterationsschritten erreichen die klassenspezifischen Genauigkeiten für jede Klasse ihre Konvergenz, d.h. die klassenspezifischen Genauigkeiten nähern sich einem Konvergenzwert 4040. Somit liegen die klassenspezifischen Genauigkeiten (bzw. Evaluationsmetriken) nach der Konvergenz in einem Wertebereich 4050 (bspw. eine klassenspezifische Genauigkeit bzw. Evaluationsmetrik für das Primärobjekt und eine klassenspezifische Genauigkeit bzw. Evaluationsmetrik für das Sekundärobjekt). Dabei kann der Konvergenzwert 4040 den Mittelwert dieses Wertebereichs 4050 bilden.

In der unteren Abbildung der Fig. 4 wird der Verlauf des klassenspezifischen Mengenverhältnisses für jede der zehn Klassen veranschaulicht. Nach mehreren Iterationsschritten nähern sich die Mengenverhältnisse der einzelnen Klassen einem stabilen Wert an. Beispielsweise erreicht das Verhältnis der Klasse mit dem höchsten Anteil (zum Beispiel "Hund") nach der Konvergenz den Wert 0,25. Dies bedeutet, dass 25 % aller Bilder des Datensatzes dieser Klasse ("Hund") zugeordnet sind. Entsprechend ergeben sich andere klassenspezifische Mengenverhältnisse für die weiteren Klassen.

Die Ergebnisse zeigen, dass das Klassifizierungsmodell bei bestimmten Objekten, wie etwa Hunden, auf erhebliche Herausforderungen stoßen könnte. Diese Objekte scheinen weniger charakteristische Merkmale aufzuweisen oder variieren möglicherweise stärker in ihrer Darstellung, was die Erkennung erschwert. Somit kann es auch sein, dass es für das Klassifizierungsmodell schwierig ist, solche Objekte präzise zu klassifizieren.

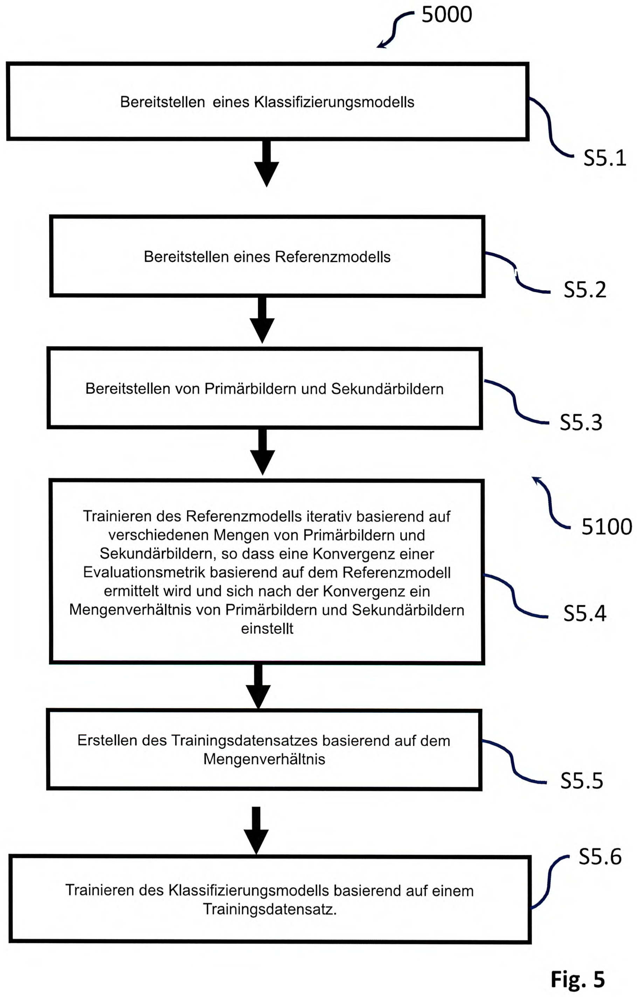

Fig. 5 zeigt eine schematische Darstellung eines computer-implementierten Verfahren 5000 zum Trainieren des Klassifizierungsmodells K gemäß einer Ausführungsform.

Das Verfahren 5000 umfasst in einem ersten Schritt S5.1 Bereitstellen eines Klassifizierungsmodells K. Das Klassifizierungsmodell K liegt beispielsweise auf dem System 2010 zur Datenverarbeitung der landwirtschaftlichen Arbeitsmaschine 2000 in gespeicherter Form vor. Ferner ist das Klassifizierungsmodell K zur Bildklassifizierung eingerichtet und kann Bilddaten bzw. einzelne Bilder in vordefinierte Klassen (bspw. Klasse "Tier", "Mensch", usw.) einordnen.

Zum Erstellen des Trainingsdatensatzes T kann ein computer-implementiertes Verfahren 5100 zum Einsatz kommen. Dabei wird in einem Schritt S5.2 ein Referenzmodells R bereitgestellt. Das Referenzmodell R ist dabei als ein Modell zu verstehen, das zur Bestimmung des Mengenverhältnisses V herangezogen wird. Es kann dem gleichen Modelltyp wie das Klassifizierungsmodell K oder einem anderen Modelltyp angehören.

In einem dritten Schritt S5.3 werden Primärbilder B1 und Sekundärbilder B2 bereitgestellt. Dabei ist das Primärobjekt 2040 typischerweise in den Primärbildern B1 abgebildet, d.h. das Primärobjekt 2040 kann jeweils einem der Primärbildern B1 zugeordnet sein. Es ist ferner möglich, dass ein Sekundärobjekt 2050 entsprechend in den Sekundärbildern B2 abgebildet ist.

Der vierte Schritt S5.4 sieht vor, dass das Referenzmodells R iterativ basierend auf verschiedenen Mengen von Primärbildern B1 und Sekundärbildern B2 trainiert wird, so dass eine Konvergenz der Evaluationsmetrik E basierend auf dem Referenzmodell R ermittelt wird und sich nach der Konvergenz ein Mengenverhältnis V von Primärbildern B1 und Sekundärbildern B2 einstellt.

In einem weiteren fünften Schritt S5.5 wird der Trainingsdatensatz T basierend auf dem Mengenverhältnis V erstellt. Das Mengenverhältnis V von Primärbildern B1 zu Sekundärbildern B2 beschreibt das proportionale Verhältnis zwischen den zwei Gruppen von Bildern innerhalb des Trainingsdatensatzes. Das Mengenverhältnis V gibt vorliegend beispielsweise an, wie viele Primärbilder B1 im Vergleich zu Sekundärbildern B2 vorhanden sind, zum Beispiel 3:1, was bedeutet, dass es drei Primärbilder für jedes Sekundärbild gibt.

In einem sechsten Schritt S5.6 umfasst das Verfahren 5000 ein Trainieren des Klassifizierungsmodells K basierend auf einem Trainingsdatensatz T. Während des Trainings bzw. Trainingsprozesses lernt das Klassifizierungsmodell K, Muster und Zusammenhänge in den Trainingsdaten T zu erkennen, um präzise Vorhersagen oder Klassifikationen für neue, unbekannte Bilddaten treffen zu können.

Vorteilhafterweise ermöglicht das Verfahren, die Gesamtanzahl der Bilder des Trainingsdatensatz T mittels Mengenverhältnisses V flexibel einzustellen. Beispielsweise kann eine Gesamtzahl von 2000 Bilder verwendet werden, wobei das Mengenverhältnis V die Anzahl der klassenspezifischen Bilder bestimmt. Ferner kann die Gesamtanzahl auf 20000 Bilder erhöht werden, um die Genauigkeit signifikant zu steigern. Dabei kann das Mengenverhältnis V gleichbleiben.

### Bezugszeichenliste

- 1000: Verfahren zum Erkennen eines Primärobjekts
- S1.1-S1.3: Verfahrensschritte

- 2000: Landwirtschaftliche Arbeitsmaschine
- 2010: System zur Datenverarbeitung
- 2020: Prozessor
- 2030: Computersystem
- 2040: Primärobjekt
- 2050: Sekundärobjekt
- 2060: weiteres Objekt
- 2070: Feldumgebung
- 2080: Kamerasystem
- 2090: Ausgabeeinrichtung

- 3000: Framework
- 3010: erster Abschnitt
- 3020: zweiter Abschnitt
- 3030: dritter Abschnitt

- 4000: Ergebnisse
- 4010: klassenspezifische Evaluationsmetrik
- 4020: klassenspezifische Mengenverhältnisse
- 4030: Iterationsschritte
- 4040: Konvergenzwert
- 4050: Wertebereich
- 4060: Verlauf

- 5000: Verfahren zum Trainieren eines Klassifizierungsmodells
- 5100: Verfahren zum Erstellen eines Trainingsdatensatzes
- S5.1-S5.6: Verfahrensschritte

- K: Klassifizierungsmodell
- R: Referenzmodell
- T: Trainingsdatensatz
- V: Mengenverhältnis
- E: Evaluationsmetrik
- B1: Primärbilder
- B2: Sekundärbilder

## Patentansprüche

1. Computer-implementiertes Verfahren (1000) zum Erkennen eines Primärobjekts (2040) in einer Feldumgebung (2070),
das Verfahren (1000) umfassend:
Bereitstellen eines trainierten Klassifizierungsmodells (K), wobei das Klassifizierungsmodell (K) basierend auf einem Trainingsdatensatz (T), umfassend ein Mengenverhältnis (V) von Primärbildern (B1) und Sekundärbildern (B2), trainiert wurde,
wobei das Primärobjekt (2040) in den Primärbildern (B1) und das Sekundärobjekt (2050) in den Sekundärbildern (B2) abgebildet ist und wobei das Mengenverhältnis (V) mittels eines Referenzmodells (R) bestimmt wurde, indem das Referenzmodell (R) iterativ basierend auf verschiedenen Mengen von Primärbildern (B1) und Sekundärbildern (B2) trainiert wurde, so dass eine Konvergenz einer Evaluationsmetrik (E) basierend auf dem Referenzmodell (R) ermittelt wurde und sich nach der Konvergenz das Mengenverhältnis (V) von Primärbildern (B1) und Sekundärbildern (B2) einstellte; und
Erkennen des Primärobjekts (2040), indem ein Bild der Feldumgebung (2070) erfasst wird und das Primärobjekt (2040) mittels des trainierten Klassifizierungsmodells (K) im erfassten Bild detektiert wird.

2. Verfahren (1000) nach Anspruch 1,
umfassend:
Einstellen einer landwirtschaftlichen Arbeitsmaschine (2000), die sich in der Feldumgebung (2070) befindet, basierend auf dem erkannten Primärobjekt (2040).

3. Verfahren (1000) nach Anspruch 1 oder 2,
wobei nach der Konvergenz die Evaluationsmetrik (E) und eine klassenspezifische Evaluationsmetrik (4010) für das Primärobjekt (2040) in einem Wertebereich liegen, und/oder
wobei nach der Konvergenz die Evaluationsmetrik (E) und eine klassenspezifische Evaluationsmetrik (4010) für das Sekundärobjekt (2050) in einem Wertebereich liegen, und/oder
wobei nach der Konvergenz eine klassenspezifische Evaluationsmetrik (4010) für das Primärobjekt und eine klassenspezifische Evaluationsmetrik (4010) für das Sekundärobjekt (2050) in einem Wertebereich liegen.

4. Verfahren (1000) nach Anspruch 1 oder 2,
eine Relation zwischen einer klassenspezifischen Evaluationsmetrik (4010) für das Primärobjekt (2040) und einer klassenspezifischen Evaluationsmetrik (4010) für das Sekundärobjekt (2050) bestimmt wurde.

5. Verfahren (1000) nach einem der vorherigen Ansprüche,
wobei die Evaluationsmetrik (E) eine Sensitivität, Präzision, Genauigkeit oder einen F1 Score umfasst.

6. Verfahren (1000) nach einem der vorherigen Ansprüche,
wobei jedes der Primärbilder (B1) ein Label umfasst, wobei das Label angibt, dass das Primärobjekt (2040) in dem entsprechenden Primärbild abgebildet ist, und/oder wobei jedes der Primärbilder (B1) eine Vielzahl von Pixeln umfasst und eine Anzahl an Pixeln zusammengefasst dem Primärobjekt (2040) zuordbar sind.

7. Computer-implementiertes Verfahren (5100) zum Erstellen eines Trainingsdatensatzes (T), umfassend:
Bereitstellen eines Referenzmodells (R);
Bereitstellen von Primärbildern (B1) und Sekundärbildern (B2);
Trainieren des Referenzmodells (R) iterativ basierend auf verschiedenen Mengen von Primärbildern (B1) und Sekundärbildern (B2), so dass eine Konvergenz einer Evaluationsmetrik (E) basierend auf dem Referenzmodell (R) ermittelt wird und sich nach der Konvergenz ein Mengenverhältnis (V) von Primärbildern (B1) und Sekundärbildern (B2) einstellt; und
Erstellen des Trainingsdatensatzes (T) basierend auf dem Mengenverhältnis (V).

8. Computer-implementiertes Verfahren (5000) zum Trainieren eines Klassifizierungsmodells (K), umfassend:
Bereitstellen eines Klassifizierungsmodells (K);
Trainieren des Klassifizierungsmodells (K) basierend auf einem Trainingsdatensatz (T), wobei der Trainingsdatensatz (T) mittels des Verfahrens (5100) nach Anspruch 7 erstellt wurde.

9. Computersystem (2030) zum Bereitstellen eines trainierten Klassifizierungsmodells (K), umfassend Mittel zum Senden des trainierten Klassifizierungsmodells (K) an eine landwirtschaftliche Arbeitsmaschine (2000), wobei das Klassifizierungsmodell (K) mittels des Verfahrens (5000) nach Anspruch 8 trainiert wurde.

10. System (2010) zur Datenverarbeitung für eine landwirtschaftliche Arbeitsmaschine (2000), umfassend einen Prozessor (2020), der so angepasst und/oder konfiguriert ist, dass er das Verfahren nach einem der vorherigen Ansprüche ausführt.

11. Landwirtschaftliche Arbeitsmaschine (2000) mit einem System (2010) zur Datenverarbeitung nach Anspruch 10.
